# EUROPEAN PATENT APPLICATION

(11) **EP 4 730 131 A1**
(43) Date of publication of application: **22.04.2026**
(21) Application number: 25205537.1
(22) Date of filing: 30.09.2025
(51) Int. Cl.: G06F 9/54, G06F 16/176

(54) **FILE SHARING METHOD, SYSTEM, STORAGE MEDIUM AND CHIP APPLIED TO MULTI-DOMAIN SOC**

(30) Priority: 16.10.2024 CN 202411442957
(71) Applicant: Shenzhen Lichi Semiconductor Technology Co. Ltd., Shenzhen (CN)
(72) Inventor: LUO, Yongjun, Shenzhen (CN); XU, Xiaofeng, Shenzhen (CN)
(74) Representative: Ziebig Hengelhaupt Intellectual Property Attorneys Patentanwaltskanzlei PartGmbB

(57) **Abstract**

The present application discloses a file sharing method, system, storage medium and chip applied to a multi-domain SOC, related to technical field of chips. When a first process in a first domain shares a target file to a second process in a second domain, it acquires a file handle of the target file for identifying the target file; it maps its own first file structure for operating the target file to a shared memory to obtain a first mapping address; the second process creates a second file structure, acquires the first mapping address, points the second file structure to the first mapping address and operates the target file according to the file handle through the second file structure. This application eliminates multiple links and copies during the cross-domain file sharing, which not only saves resources, but improves the transmission rate and realizes the highspeed transmission of big data.

## Description

### TECHNICAL FIELD

The present application relates to technical field of chips, especially relates to a file sharing method, a system, a storage medium and a chip applied to a multi-domain SOC.

### BACKGROUND

Different operating systems can be installed on different domains of System on Chip (SOC), such as Linux system and Android system. In Linux system and Android system, many resources and objects are abstracted as files, which are managed and operated through a unified file interface. Not only ordinary files and directories exist in the form of files, but also block devices, pipes and sockets, etc. are uniformly managed by the file system. Even the drivers for some external devices are file nodes, such as those for input devices (keyboard, touch) and output devices (display screen, serial port log, etc.).

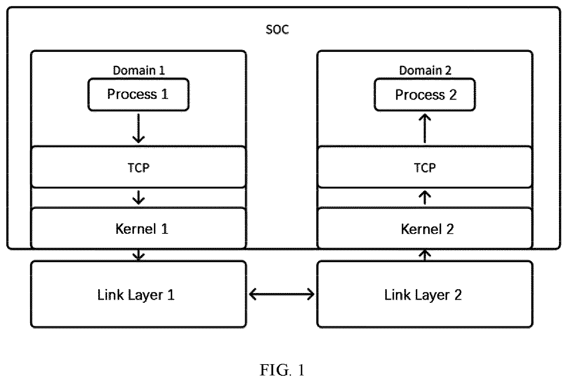

As shown in Fig. 1, process 1 in Domain 1 shares files with process 2 in Domain 2. Specifically, process 1 copies files to kernel 1 through Transmission Control Protocol (TCP), kernel 1 copies files to link layer 1, link layer 1 copies files to link layer 2, link layer 2 copies files to kernel 2, and kernel 2 copies files to process 2 through TCP.

File sharing between cross-domain processes needs to experience multiple links and multiple copies, which requires relatively more resources consumption.

### SUMMARY

The present application provides a file sharing method, a system, a storage medium and a chip applied to a multi-domain SOC , which are used to solve the problem that file sharing between cross-domain processes needs to experience multiple links and multiple copies and consumes relatively more resources. The technical solution is as follows:
According to the first aspect of the present application, a file sharing method applied to a multi-domain SOC is provided, which is used in an SOC containing at least two domains, the method including:
when a first process in a first domain shares a target file to a second process in a second domain, the first process acquires a file handle of the target file, the file handle being used to identify the target file;
the first process maps its own first file structure to a shared memory to obtain a first mapping address, the first file structure being used to operate the target file;
the second process creates a second file structure;
the second process acquires the first mapping address, points the second file structure to the first mapping address, and operates the target file according to the file handle through the second file structure.

In one possible implementation, the first domain further includes a first shared file system and a first file system manager, and the second domain further includes a second shared file system and a second file system manager; the method further includes:
the first process is registered in the first file system manager through the first shared file system;
the first shared file system synchronizes registration information of the first process to the second file system manager through the second shared file system;
the second process is registered in the second file system manager through the second shared file system;
the second shared file system synchronizes registration information of the second process to the first file system manager through the first shared file system.

In one possible implementation, the second process acquiring the first mapping address includes:
the second process requests the first mapping address from the first file system manager;
the first file system manager maps the first mapping address to a shared memory and sends the obtained second mapping address to the second process;
the second process acquires the first mapping address according to the second mapping address.

In one possible implementation, the second process requesting the first mapping address from the first file system manager includes:
the second process requests the first mapping address from the second file system manager through the second shared file system;
the second file system manager requests the first mapping address from the first file system manager through the first shared file system.

In one possible implementation, sending the obtained second mapping address to the second process includes:
the first file system manager sends the obtained second mapping address to the second file system manager;
the second file system manager sends the second mapping address to the second process through the second shared file system.

In one possible implementation, the first process mapping its own first file structure to a shared memory to obtain a first mapping address includes:
the first process maps its own first file structure to a pre-allocated shared memory in a storage to obtain a first mapping address; or,
the first process maps its own first file structure to a memory of a Mailbox to obtain a first mapping address.

In a possible implementation, the first shared file system and the second shared file system are Sharefs, and the first file system manager and the second file system manager are Fsmanager.

According to the second aspect of the application, a file sharing system applied to a multi-domain SOC is provided, which is used in an SOC, the SOC containing at least two domains;
when a first process in a first domain shares a target file with a second process in a second domain, the first process is used to acquire a file handle of the target file, the file handle being used to identify the target file;
the first process is further used to map its own first file structure to a shared memory to obtain a first mapping address, the first file structure being used to operate the target file;
the second process is used to create a second file structure;
the second process is further used to acquire the first mapping address, point the second file structure to the first mapping address, and operate the target file according to the file handle through the second file structure.

In one possible implementation, the first domain further includes a first shared file system and a first file system manager, and the second domain further includes a second shared file system and a second file system manager;
the first process is further used to register in the first file system manager through the first shared file system;
the first shared file system is used to synchronize a registration information of the first process to the second file system manager through the second shared file system;
the second process is further used to register in the second file system manager through the second shared file system;
the second shared file system is used to synchronize a registration information of the second process to the first file system manager through the first shared file system.

In one possible implementation, the second process is further used to request the first mapping address from the first file system manager;
the first file system manager is used to map the first mapping address to a shared memory and send the obtained second mapping address to the second process;
the second process is further used to acquire the first mapping address according to the second mapping address.

In one possible implementation, the second process is further used to request the first mapping address from the second file system manager through the second shared file system;
the second file system manager is used to request the first mapping address from the first file system manager through the first shared file system.

In one possible implementation, the first file system manager is further used to send the obtained second mapping address to the second file system manager;
the second file system manager is further used to send the second mapping address to the second process through the second shared file system.

In one possible implementation, the first process is specifically used to:
map its own first file structure to a pre-allocated shared memory in a storage to obtain a first mapping address; or,
map its own first file structure to a memory of a Mailbox to obtain the first mapping address.

According to the third aspect of the present application, a computer-readable storage medium is provided, at least one instruction is stored in the storage medium, and the at least one instruction is loaded and executed by a processor to realize the file sharing method applied to a multi-domain SOC as described above.

According to a fourth aspect of the present application, a chip is provided, which includes the file sharing system applied to a multi-domain SOC as described above.

The technical solution provided by the present application has the beneficial effects that at least include:
there is no need to experience multiple links and multiple copies during the cross-domain file sharing, which not only saves resources, but also improves the transmission rate and can realize the high-speed transmission of big data.

The security of data communication between processes can be improved by mapping the file structure to the memory of the Mailbox.

### BRIEF DESCRIPTION OF THE DRAWINGS

In order to explain the technical solution in the embodiments of the present application more clearly, brief descriptions of the drawings used in the description of the embodiments will be provided below. It is apparent that the drawings in the following description are only some embodiments of the present application, and for those skilled in the art, other drawings can be obtained according to these drawings without creative work.
Fig. 1 is a schematic diagram of a process of a cross-domain file sharing according to the related art;
Fig. 2 is a schematic structural diagram of a SOC provided by one embodiment of the present application;
Fig. 3 is a flowchart of a file sharing method applied to a multi-domain SOC provided by one embodiment of the present application;
Fig. 4 is a flowchart of a file sharing method applied to a multi-domain SOC provided by another embodiment of the present application.

### DETAILED DESCRIPTION

In order to make the purpose, technical solution and advantages of the embodiment of the present application more clear, the embodiment of the present application will be further described in detail in conjunction with the attached drawings.

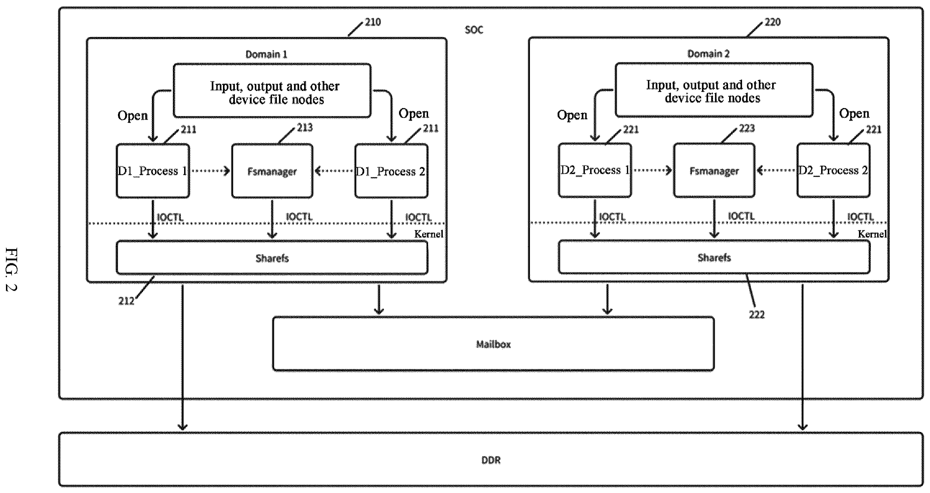

System on Chip (SOC) includes multiple domains and Mailbox, and a domain (also referred to as a hardware domain) is a unit in the SOC chip that consists of groups of independent hardware resources, including but not limited to CPU, GPU, IO controller, etc. Each group of hardware resources can independently support the operation of the operating system, and the operating systems running in different domains are independent and do not interfere with each other at the hardware level. The data in each domain is stored in a storage. The number of domains and the specific type of the storage are not limited in the present application. To facilitate understanding, two domains including a first domain (Domain 1) 210 and a second domain (Domain 2) 220 and the storage being a Double Data Rate (DDR) storage are taken as an example in Fig. 2.

Each domain corresponds to one kernel, which includes file nodes (input, output and other devices), shared file system (/Dev/Sharefs), file system manager (Fsmanager) and multiple processes. The number of processes is not limited in the present application. To facilitate the distinction, the process in the first domain 210 is referred to as the first process 211 and the process in the second domain 220 is referred to as the second process 221; the shared file system in the first domain 210 is referred to as the first shared file system 212, and the file system manager in the first domain 210 is referred to as the first file system manager 213; the shared file system in the second domain 220 is referred to as the second shared file system 222, and the file system manager in the second domain 220 is referred to as the second file system manager 223.

When multiple processes are created in one domain, the process names in Domain 1 are denoted as D1_Process 1 and D1_Process 2; while the process names in Domain 2 are denoted as D2_Process 1 and D2_Process 2 for distinction.

Process communicates with Sharefs through system call (Input/Output Control, IOCTL), Sharefs communicates with Fsmanager through IOCTL, and Sharefs between different domains communicates through Mailbox. Each Sharefs stores data in the shared memory in DDR or the memory in Mailbox.

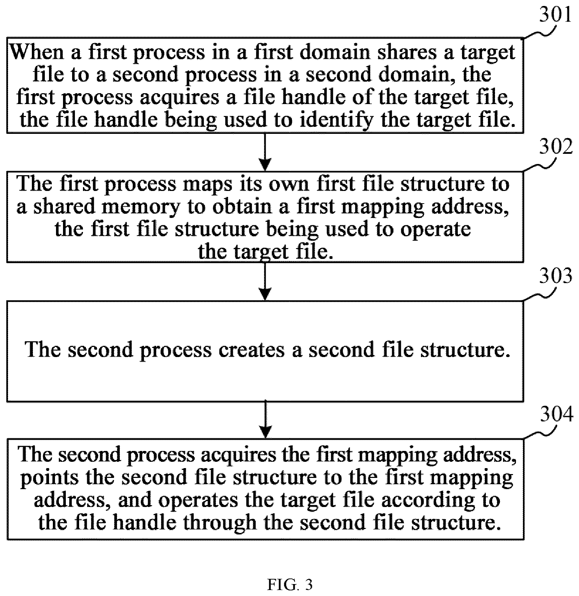

As shown in Fig. 3, it shows the method flow chart of the file sharing method applied to a multi-domain SOC provided by one embodiment of the present application, which can be applied to the SOC shown in Fig. 2. The file sharing method applied to a multi-domain SOC may include:
Step 301: when a first process in a first domain shares a target file to a second process in a second domain, the first process acquires a file handle of the target file, the file handle being used to identify the target file.

Multiple files are stored in the file node. In this embodiment, the file shared this time in the first process is referred to as the target file.

The first process can call the operation file function to open the target file in the file node and obtain the file handle of the target file.

Step 302: the first process maps its own first file structure to a shared memory to obtain a first mapping address, the first file structure being used to operate the target file.

In order to facilitate distinction, in this embodiment, the file structure created by the first process is referred to as the first file structure, and the file structure created by the second process is referred to as the second file structure.

Shared memory is the memory that can be accessed by processes in multiple domains in SOC, wherein the shared memory can be pre-allocated memory on the storage or the memory of Mailbox.

The first process needs to call the first file structure so that the first file structure can operate the file according to the file handle.

Step 303: the second process creates a second file structure.

The second file structure is the file structure that needs to open the target file shared by the first process.

Step 304: the second process acquires the first mapping address, points the second file structure to the first mapping address, and operates the target file according to the file handle through the second file structure.

To sum up, in the file sharing method applied to a multi-domain SOC provided by the embodiment of the present application, the first process in the first domain can acquire the file handle of the target file, map its own first file structure to the shared memory, and obtain the first mapping address; the second process in the second domain can create a second file structure, acquire the first mapping address, point the second file structure to the first mapping address, and operate the target file according to the file handle through the second file structure, so that the two processes across domains can communicate through the shared file without experiencing multiple links and multiple copies during the cross-domain file sharing, which not only saves resources, but also improves the transmission rate and can realize the high-speed transmission of big data.

The security of data communication between processes can be provided by mapping the file structure to the memory of the Mailbox.

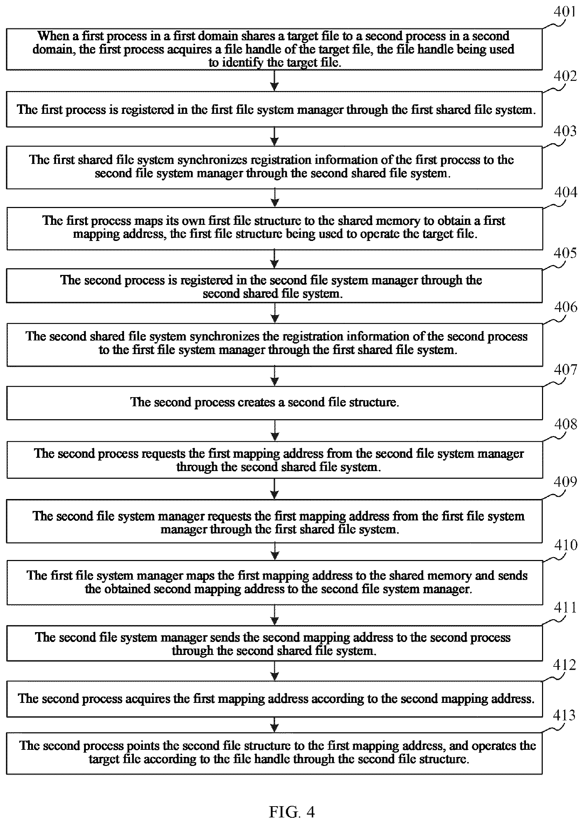

As shown in Fig. 4, it shows a flowchart of a file sharing method applied to a multi-domain SOC provided by another embodiment of the present application, which can be applied to the SOC shown in Fig. 2. The file sharing method applied to a multi-domain SOC may include:
Step 401: when a first process in a first domain shares a target file to a second process in a second domain, the first process acquires a file handle of the target file, the file handle being used to identify the target file.

Multiple files are stored in the file node. In this embodiment, the file shared this time in the first process is referred to as the target file.

The first process can call the operation file function to open the target file in the file node and obtain the file handle of the target file.

Before sharing the target file, the first process and the second process need to be registered in the file system manager in their respective domains. In this embodiment, the sequential registration order of the first process and the second process is not limited, that is, the execution order of steps 402-403 and steps 405-406 is not limited.

Step 402: the first process is registered in the first file system manager through the first shared file system.

The first process can send registration information to the first shared file system, and the registration information carries the process identifier of the first process; the first shared file system forwards the registration information to the first file system manager; the first file system manager stores the registration information of the first process. Wherein the first shared file system may be Sharefs, and the first file system manager may be Fsmanager.

Step 403: the first shared file system synchronizes registration information of the first process to the second file system manager through the second shared file system.

The first shared file system acquires the process identifier of the first process and the domain identifier of the first domain, generates registration information carrying the process identifier and the domain identifier, and sends the registration information to the second shared file system. The second shared file system forwards the registration information to the second file system manager, and the second file system manager stores the registration information, wherein the second shared file system may be Sharefs, and the second file system manager may be Fsmanager.

Step 404: the first process maps its own first file structure to the shared memory to obtain a first mapping address, and the first file structure is used to operate the target file.

In order to facilitate distinction, in this embodiment, the file structure created by the first process is referred to as the first file structure, and the file structure created by the second process is referred to as the second file structure.

The first process needs to call the first file structure so that the first file structure can operate the file according to the file handle.

Shared memory is the memory that can be accessed by processes in multiple domains in SOC. Wherein the shared memory can be pre-allocated memory on the storage or the memory of the Mailbox. Specifically, the first process can map its own first file structure to the pre-allocated shared memory in the storage to obtain the first mapping address; alternatively, the first process can map its own first file structure to the memory of the Mailbox to obtain the first mapping address.

Generally, the storage space of the shared memory of the storage will be larger than that of the Mailbox, so when a large amount of data needs to be shared, it is possible to choose to use the shared memory of the storage; when a small amount of data needs to be shared, it is possible to choose to use the memory of the Mailbox. Of course, what kind of shared memory can be used can also be considered from other aspects, which is not limited in this embodiment.

Step 405: the second process is registered in the second file system manager through the second shared file system.

The second process can send registration information to the second shared file system, and the registration information carries the process identifier of the second process; the second shared file system forwards the registration information to the second file system manager; the second file system manager stores the registration information of the second process.

Step 406: the second shared file system synchronizes the registration information of the second process to the first file system manager through the first shared file system.

The second shared file system acquires the process identifier of the second process and the domain identifier of the second domain, generates registration information carrying the process identifier and the domain identifier, and sends the registration information to the first shared file system. The first shared file system forwards the registration information to the first file system manager, and the first file system manager stores the registration information.

Step 407: the second process creates a second file structure.

The second file structure is the file structure that needs to open the target file shared by the first process.

The second process itself also has one third file structure, and the second process can call the third file structure to operate the file on the file node corresponding to the second process. When the second process needs to share files to other processes, the third file structure can be mapped to the shared memory, and the obtained third mapping address can be shared to other processes, so that other processes can operate the files shared by the second process according to the third mapping address.

Step 408: the second process requests the first mapping address from the second file system manager through the second shared file system.

The second process initiates an address acquisition request of the first mapping address to the second file system manager through the second shared file system, and the address acquisition request includes at least the process identifier of the first process and also the domain identifier of the first domain.

Step 409: the second file system manager requests the first mapping address from the first file system manager through the first shared file system.

The second file system manager sends an address acquisition request to the second shared file system, the second shared file system initiates an address acquisition request of a first mapping address to the first file system manager through the first shared file system, and the address acquisition request includes the process identifier of the first process.

Step 410: the first file system manager maps the first mapping address to the shared memory and sends the obtained second mapping address to the second file system manager.

The first file system manager determines the registered first process according to the process identifier in the address acquisition request, acquires the first mapping address from the first process, maps the first mapping address to the shared memory of the storage or the memory of the Mailbox, and sends the obtained second mapping address to the second file system manager through the second shared file system.

Step 411: the second file system manager sends the second mapping address to the second process through the second shared file system.

Step 412: the second process acquires the first mapping address according to the second mapping address.

The second process reads the first mapping address in the storage space corresponding to the second mapping address.

Step 413: the second process points the second file structure to the first mapping address, and operates the target file according to the file handle through the second file structure.

To sum up, in the file sharing method applied to a multi-domain SOC provided by the embodiment of the present application, the first process in the first domain can acquire the file handle of the target file, map its own first file structure to the shared memory, and obtain the first mapping address; the second process in the second domain can create a second file structure, acquire the first mapping address, point the second file structure to the first mapping address, and operate the target file according to the file handle through the second file structure, so that the two processes across domains can communicate through the shared file without experiencing multiple links and multiple copies during the cross-domain file sharing, which not only saves resources, but also improves the transmission rate and can realize the high-speed transmission of big data.

The security of data communication between processes can be improved by mapping the file structure to the memory of the Mailbox.

As shown in Fig. 2, it shows the structural block diagram of a file sharing system applied to a multi-domain SOC provided by an embodiment of the present application, and the SOC includes at least two domains, i.e., a first domain 210 and a second domain 220, respectively;

When a first process 211 in a first domain 210 shares a target file to a second process 221 in a second domain 220, the first process 211 is used to acquire a file handle of the target file, and the file handle is used to identify the target file;
the first process 211 is further used to map its own first file structure to the shared memory to obtain a first mapping address, and the first file structure is used to operate the target file;
the second process 221 is used to create a second file structure;
the second process 221 is further used to acquire the first mapping address, point the second file structure to the first mapping address, and operate the target file according to the file handle through the second file structure.

In an alternative embodiment, the first domain 210 further includes a first shared file system 212 and a first file system manager 213, and the second domain 220 further includes a second shared file system 222 and a second file system manager 223;
the first process 211 is further used to register in the first file system manager 213 through the first shared file system 212;
the first shared file system 212 is further used to synchronize the registration information of the first process 211 to the second file system manager 223 through the second shared file system 222;
the second process 221 is further used to register in the second file system manager 223 through the second shared file system 222;
the second shared file system 222 is further used to synchronize the registration information of the second process 221 to the first file system manager 213 through the first shared file system 212.

In an alternative embodiment, the second process 221 is further used to request the first mapping address from the first file system manager 213;
the first file system manager 213 is further used to map the first mapping address to the shared memory and send the obtained second mapping address to the second process 221;
the second process 221 is further used to acquire the first mapping address according to the second mapping address;

In an alternative embodiment, the second process 221 is further used to request the first mapping address from the second file system manager 223 through the second shared file system 222;
the second file system manager 223 is further used to request the first mapping address from the first file system manager 213 through the first shared file system 212.

In an alternative embodiment, the first file system manager 213 is further used to send the obtained second mapping address to the second file system manager 223;
the second file system manager 223 is further used to send the second mapping address to the second process 221 through the second shared file system 222.

In an alternative embodiment, the first process 211 is specifically used to:
map its own first file structure to a pre-allocated shared memory in a storage to obtain a first mapping address; or,
map its own first file structure to the memory of the Mailbox to obtain the first mapping address.

In an alternative embodiment, the first shared file system and the second shared file system may be Sharefs, and the first file system manager and the second file system manager may be Fsmanager.

To sum up, in the file sharing system applied to a multi-domain SOC provided by the embodiment of the present application, the first process in the first domain can acquire the file handle of the target file, map its own first file structure to the shared memory, and obtain the first mapping address; the second process in the second domain can create a second file structure, acquire the first mapping address, point the second file structure to the first mapping address, and operate the target file according to the file handle through the second file structure, so that the two processes across domains can communicate through the shared file without experiencing multiple links and multiple copies during the cross-domain file sharing, which not only saves resources, but also improves the transmission rate and can realize the high-speed transmission of big data.

The security of data communication between processes can be improved by mapping the file structure to the memory of the Mailbox.

An embodiment of the present application provides a computer-readable storage medium, at least one instruction is stored in the storage medium, and the at least one instruction is loaded and executed by a processor to realize the file sharing method applied to a multi-domain SOC as described above.

An embodiment of the present application provides a chip, which includes any file sharing system applied to a multi-domain SOC described above.

It should be noted that the file sharing system applied to a multi-domain SOC provided in the above embodiments only illustrates by examples the division of the above-mentioned functional modules when performing cross-domain file sharing. In practical application, the above-mentioned functional allocation can be completed by different functional modules as needed, that is, the internal structure of the file sharing system applied to a multi-domain SOC is divided into different functional modules to complete all or part of the above-mentioned functions. In addition, the file sharing system applied to a multi-domain SOC provided in the above embodiment belongs to the same concept as the file sharing method embodiment applied to a multi-domain SOC, and the specific implementation process is detailed in the method embodiment, which is not repeated here.

Those skilled in the art can understand that all or part of the steps to realize the above-mentioned embodiment can be completed by hardware, or instructing the relevant hardware by a program, which can be stored in a computer-readable storage medium, and the above-mentioned storage medium can be read-only storage, magnetic disk or optical disk, etc.

The above is not intended to limit the embodiment of the present application, and any adjustment, equivalent substitution, improvement, etc. made within the spirit and principle of the embodiment of the present application should be contained in the protection scope of the embodiment of the present application.

## Claims

1. A file sharing method applied to a multi-domain SOC, **characterized in that**, it is used in an SOC containing at least two domains, the method including:
when a first process in a first domain shares a target file to a second process in a second domain, the first process acquires a file handle of the target file, the file handle being used to identify the target file;
the first process maps its own first file structure to a shared memory to obtain a first mapping address, the first file structure being used to operate the target file;
the second process creates a second file structure;
the second process acquires the first mapping address, points the second file structure to the first mapping address, and operates the target file according to the file handle through the second file structure.

2. The file sharing method applied to a multi-domain SOC according to claim 1, **characterized in that**, the first domain further includes a first shared file system and a first file system manager, the second domain further includes a second shared file system and a second file system manager; the method further includes:
the first process is registered in the first file system manager through the first shared file system;
the first shared file system synchronizes registration information of the first process to the second file system manager through the second shared file system;
the second process is registered in the second file system manager through the second shared file system;
the second shared file system synchronizes registration information of the second process to the first file system manager through the first shared file system.

3. The file sharing method applied to a multi-domain SOC according to claim 2, **characterized in that**, the second process acquiring the first mapping address includes:
the second process requests the first mapping address from the first file system manager;
the first file system manager maps the first mapping address to a shared memory and sends the obtained second mapping address to the second process;
the second process acquires the first mapping address according to the second mapping address.

4. The file sharing method applied to a multi-domain SOC according to claim 3, **characterized in that**, the second process requesting the first mapping address from the first file system manager includes:
the second process requests the first mapping address from the second file system manager through the second shared file system;
the second file system manager requests the first mapping address from the first file system manager through the first shared file system

5. The file sharing method applied to a multi-domain SOC according to claim 3, **characterized in that**, sending the obtained second mapping address to the second process includes:
the first file system manager sends the obtained second mapping address to the second file system manager;
the second file system manager sends the second mapping address to the second process through the second shared file system.

6. The file sharing method applied to a multi-domain SOC according to claim 1, **characterized in that**, the first process mapping its own first file structure to a shared memory to obtain a first mapping address includes:
the first process maps its own first file structure to a pre-allocated shared memory in a storage to obtain a first mapping address; or,
the first process maps its own first file structure to a memory of a Mailbox to obtain a first mapping address.

7. The file sharing method applied to a multi-domain SOC according to any one of claims 2 to 5, **characterized in that**, the first shared file system and the second shared file system are Sharefs, and the first file system manager and the second file system manager are Fsmanager.

8. A file sharing system applied to a multi-domain SOC **characterized by** being used in a SOC, the SOC containing at least two domains;
when a first process in a first domain shares a target file to a second process in a second domain, the first process is used to acquire a file handle of the target file, the file handle being used to identify the target file;
the first process is further used to map its own first file structure to a shared memory to obtain a first mapping address, the first file structure being used to operate the target file;
the second process is used to create a second file structure;
the second process is further used to acquire the first mapping address, point the second file structure to the first mapping address, and operate the target file according to the file handle through the second file structure.

9. The file sharing system applied to a multi-domain SOC according to claim 8, **characterized in that**, the first domain further includes a first shared file system and a first file system manager, the second domain further includes a second shared file system and a second file system manager;
the first process is further used to register in the first file system manager through the first shared file system;
the first shared file system is used to synchronize a registration information of the first process to the second file system manager through the second shared file system;
the second process is further used to register in the second file system manager through the second shared file system;
the second shared file system is used to synchronize a registration information of the second process to the first file system manager through the first shared file system.

10. The file sharing system applied to a multi-domain SOC according to claim 9, **characterized in that**,
the second process is further used to request the first mapping address from the first file system manager;
the first file system manager is used to map the first mapping address to a shared memory and send the obtained second mapping address to the second process;
the second process is further used to acquire the first mapping address according to the second mapping address.

11. The file sharing system applied to a multi-domain SOC according to claim 10, **characterized in that**,
the second process is further used to request the first mapping address from the second file system manager through the second shared file system;
the second file system manager is used to request the first mapping address from the first file system manager through the first shared file system.

12. The file sharing system applied to a multi-domain SOC according to claim 10, **characterized in that**,
the first file system manager is further used to send the obtained second mapping address to the second file system manager;
the second file system manager is further used to send the second mapping address to the second process through the second shared file system.

13. The file sharing system applied to a multi-domain SOC according to claim 8, **characterized in that**, the first process is specifically used to:
map its own first file structure to a pre-allocated shared memory in a storage to obtain a first mapping address; or,
map its own first file structure to a memory of a Mailbox to obtain the first mapping address.

14. A computer-readable storage medium, **characterized in that**, at least one instruction is stored in the storage medium, the at least one instruction is loaded and executed by a processor to realize the file sharing method applied to a multi-domain SOC according to any one of claims 1 to 7.

15. A chip, **characterized in that**, the clip includes: the file sharing system applied to a multi-domain SOC according to any one of claims 8-13.
